# EUROPEAN PATENT APPLICATION

(11) **EP 2 538 020 A2**
(43) Date of publication of application: **26.12.2012**
(21) Application number: 12172644.2
(22) Date of filing: 19.06.2012
(51) Int. Cl.: F01D 1/24

(54) **Gas Turbines**

(30) Priority: 22.06.2011 EP 11171077
(71) Applicant: Nercessian, Kevork, 82229 Seefeld (DE)
(72) Inventor: Nercessian, Kevork, 82229 Seefeld (DE)
(74) Representative: Lohr, Georg

(57) **Abstract**

Gas Turbine 1 comprising at least a compressor 4, at least one combustion chamber 5 and a turbine 7, wherein the turbine 7 comprises at least one turbine stage 41 driving a drive shaft 11, and the drive 11 shaft drives at least four axial compressor stages 21, 22, 23, 24 can be very efficient on the one hand and flexibly designed on the other hand if two of the at least four compressor stages21, 22, 23, 24 rotate in a first direction and two of the at least four compressor stages21, 22, 23, 24 counterrotate in a second direction and if the two counterrotating compressor stages are positioned in between of the two compressor stages rotating in the first direction.

## Description

### Field of the invention

The invention relates to a gas turbine as defined by the preamble of claim 1. In particular the invention relates to a gas turbine with at least a compressor, at least one combustion chamber and at least one turbine, wherein the turbine comprises at least one turbine stage driving a drive shaft for driving the compressor, and the drive shaft drives preferably at least four axial compressor stages.

### Description of the related art

Gas turbines are of significant importance in propelling aircrafts, ships or for driving a generator to thereby produce electricity. A simple gas turbine comprises an air inlet and an outlet, mostly in form of a nozzle. An airflow is accelerated between the inlet and the outlet. First the air flow is compressed by a compressor. The compressed air flow is provided to a combustion chamber. In the combustion chamber the air flow is heated by burning fuel. The heated air flow expands at least almost isobarically and is thus accelerated. At least a part of the energy of the accelerated air flow is used to drive a turbine downstream the combustion chamber and leaves the gas turbine by the outlet. At least a part of the power provided by the turbine is usually used to drive the compressor. To this end the compressor is coupled by at least one shaft to the turbine.

To obtain high pressures and a high air flow gas turbines often comprise axial compressors with multiple compressor stages. Each compressor stage comprises a blade wheel typically followed by a diffuser, the latter being part of the stator.

DE 10 2004 040 275 B4 discloses a gas turbine with an axial compressor followed by a combustion chamber and as usual a turbine. The turbine comprises a number of turbine stages forming a sequence of counterrotating turbine wheels. The axial compressor comprises the same number of blade wheels. The blade wheels are each connected via coaxially arranged drive shafts to one of the turbine stages, so that the blade wheels counterrotate. These subsequent counterrotating blade wheels enhance the efficiency of the compressor significantly, as the angular momentum of the air flow is kept small. A pair of two subsequent counterrotating compressor stages is about 2,52 times as efficient as pair of subsequent compressor stages having a common direction of rotation. The term rotational direction or briefly "direction" of a compressor or turbine stage refers to the rotational direction of its blade wheel or turbine wheel, respectively.

A compressor stage usually comprises at least a blade wheel as well referred to as rotor. In case of counterrotating blade wheels the diffuser may be omitted. A turbine stage usually comprises at least a turbine wheel and a set of stator vanes, the latter may be omitted.

### Summary of the invention

The problem of the invention is based on the observation that according to the prior art the number of counterrotating compressor stages is equal to the number of turbine stages. This is, however, is a severe limitation in the design of gas turbines, because in most cases one requires more compressor stages than turbine stages. Of course one could install more than only a single blade wheel on each of the coaxial drive shafts, however, this would result in a significant loss of axial pressure per turbine stage. In addition, the turbine drives usually not only the compressor, but as well some load, e.g. a blower fan.

The problem of the invention can thus be considered to provide a gas turbine with an efficient compressor that is not constrained in that the number of counterrotating compressor stages are equal to the number of counterrotating turbine stages.

A solution of the problem is defined by a gas turbine as defined by claim 1. The dependent claims relate to further improvements of the invention.

The gas turbine comprises at least a compressor, at least one combustion chamber and a turbine with at least one turbine stage. Said at least one turbine stage is coupled to a drive shaft for driving at least several compressor stages of an axial compressor. More precisely the turbine wheel of at least one turbine stage is coupled via the drive shaft to the at least several compressor stages. The axial compressor preferably has at least four compressor stages. The compressor stages can be grouped in at least two pairs, so that one rotor in a pair rotates in an opposite direction to the other rotor of the same pair. The second compressor stage of the upstream pair rotates in the same rotational direction as the first compressor stage of the downstream pair.

In other words, the two of the at least four compressor stages rotate in a first direction and two of the at least four compressor stages in a second direction, being opposed to the first direction. The two stages rotating in the opposed second direction are positioned in between of the two compressor stages rotating in the first direction. Preferably are the four compressor stages subsequent compressor stages, i.e. there are no additional compressor stages between the compressor stages forming a set of said at least four subsequent compressor stages. This configuration of compressor stages yields an extremely efficient with reduced constructional constraints. The four stages can be powered by three coaxial drive shafts or a single drive shaft where the two middle compressor stages are connected to the drive shaft via a reversing gear. This enhances the flexibility in designing the gas turbine and reduces their weight. For example, said subsequent four compressor stages could be driven by only three counterrotating turbine stages via three coaxial drive shafts.

The rotational direction of a compressor stage is defined by the rotational direction of its blade wheel. The rotational direction of a blade wheel is given by the rotational direction in which the blade wheel is driven by the respective turbine stage via a drive shaft. The blade wheel is usually equipped with blades, which are inclined against the axial direction of the blade wheel, which is usually the axial direction of the gas turbine. The direction of inclination depends on the rotational direction of the blade wheel. Thus, each blade wheel is configured to compress air by rotating the blade wheel in a given rotational direction.

In the following examples the compressor stages are enumerated as usually in ascending order starting from the intake facing compressor stage of the axial compressor. For example, the first compressor stage may rotate in a first rotational direction, the second and the third compressor stages may rotate in the opposite second direction and the fourth compressor stage again rotates in the first direction. This permits with only a single reversing gear to drive four compressor stages and by doing so the compressor stages can be grouped in pairs as explained above.

### A new operational procedure of the compressor

The invention is based on the observation that the axial flow of the compressor is optimized if the compressor stages can be grouped in pairs, wherein one rotor in a pair rotates in the opposite direction to the rotor in the same pair. At least two preferably subsequent pairs of counterrotating compressor stages are arranged such that the second compressor stage of the upstream pair has the same rotational direction as the first compressor stage of the downstream pair. This enhances flexibility in the design of the gas turbines.

The rotational direction of a compressor stage can be symbolized by a sign, i.e., "+" or "-, which may symbolize the mathematically positive and negative rotational direction, respectively. But "+" and "-" shall be understood in a more common sense, just indicating two opposed rotational directions. Thus the core idea can be expressed to arrange a set of two pairs "(+ -)" and "(- +)" as subsequent pairs, yielding either a sequence "(+ -)(-+)" or "(- +) (+ -)". After each pair, i.e., "(+ -)" or "(- +)", respectively, the non axial components of the air flow are minimized. The non axial momentum transferred from the compressor stage is compensated at least in part by the non axial momentum of the second compressor stage.

Preferably, the first compressor stage of the upstream pair is connected by a first drive shaft to the turbine, e.g. to one turbine stage. The second compressor stage of the same pair and the first compressor stage of the following downstream pair can be coupled via a common coaxial drive shaft to the turbine, for example to at least one turbine stage. The last compressor stage may be coupled via a third drive shaft to the turbine. The first to third drive shaft are coaxial drive shafts.

Alternatively a reversing gear with an input side and an output side is coupled to a drive shaft at its input side and coupled to the two subsequent stages with a common rotational direction at its output side. In the above example the second and third compressor stages may be coupled to the output side of the reversing gear. The first and fourth stage can be coupled directly to the drive shaft. This permits to further reduce the weight of the gas turbine.

In other words, a reversing gear may be positioned on the drive shaft between the two compressor stages rotating in said first direction. Thus, only a single reversing gear which is driven by the same drive shaft is necessary to realize a set of four compressor stages forming pairs, wherein one rotor in a pair rotates in the opposite direction to the other rotor in the same pair. The reversing gear may be a planetary gear.

The gas turbine may of course comprise at least one further turbine stage. This further turbine stage may be positioned before and/or after said group of pairs and may drive a further drive shaft, the latter being arranged coaxially to said at least one drive shaft. The compressor may preferably comprise at least two additional compressor stages, wherein one of the two additional compressor stages is driven by said at least one drive shaft and rotates in said first direction. The other compressor stage of said two additional compressor stages is driven by said further drive shaft in said second direction. Without any additional gear, this permits to enhance the number of pairs of compressor stages by two: For example, the gas turbine may have six compressor stages (i.e., a first to sixth stage), at least a first and a second turbine stage. The first turbine stage may drive via a first drive shaft for example the second to sixth compressor stages, wherein the fourth and fifth compressor stages rotate in an opposite rotational direction as the second, third and sixth compressor stages. The first compressor stage is preferably directly driven via a second coaxial drive shaft by the second turbine stage and thus rotates as well in an direction being opposed to the direction of the second, third and sixth compressor stage. The sequence of rotational directions reads: "(-₂ +₁) (+₁ -_{1g}) (-_{1g} +₁)" The indices 1 and 2 indicate the turbine stage driving the respective compressor stage. The subscript "g" indicates compressor stages that are driven via a reversing gear. As can be seen, only two subsequent compressor stages are driven by a reversing gear and can thus be driven via a single common reversing gear, which can be installed coaxially on the drive shaft, e.g., as planetary gear.

The same effect can of course be obtained, if the first turbine stage drives only the sixth compressor stage and the second turbine the first to fifth compressor stages. In this case the first compressor stage is coupled to the second drive shaft to rotate in the direction of the second turbine. The second and third compressor stages are coupled via a (preferably single) reversing gear to the second drive shaft. The fourth and fifth compressor stages are again coupled to the second drive shaft to rotate in the same direction as the second turbine, yielding "(+₂ -_{2g}) (-_{2g} +₂) (+₂ -₁)", again assuming that the rotational direction of the first turbine stage is again indicated by "-" and the direction of the second stage by "+".

The compressor may comprise at least one set of further four compressor stages, said four further compressor stages being all driven by said at least one drive shaft or by said further drive shaft. Two compressor stages of said further four compressor stages are positioned in between of the other two of said further compressor stages and rotate in the opposite rotational direction as the other two of said further compressor stages. Thus by only one additional gear one may enhance the number of pairs of stages by at least further four. If the two sets of four subsequent compressor stages are driven by different drive shafts, one may obtain a sequence of 5 pairs of compressor stages:
"(+₁ -_{1g}) (-_{1g} +₁) (+₁ -₂) (-₂ +_{2g}) (+_{2g} -₂)". Only two pairs of subsequent compressor stages are driven by reversing gear. Therefore, two reversing gears are sufficient: one is coupled to the first drive shaft and the other to the second drive shaft, where the two drive shafts rotate in opposite rotational directions.

Preferably the gas turbine comprises at least one set of stator blades, being positioned as diffuser between two subsequent compressor stages for reducing the non axial component of air flow in the turbine.

### Description of Drawings

In the following the invention will be described by way of example, without limitation of the general inventive concept, on examples of embodiment with reference to the drawings.
Figure 1 shows simplified scheme of a first gas turbine.
Figure 2 shows simplified scheme of a second gas turbine.
Figure 3 shows simplified scheme of a third gas turbine.

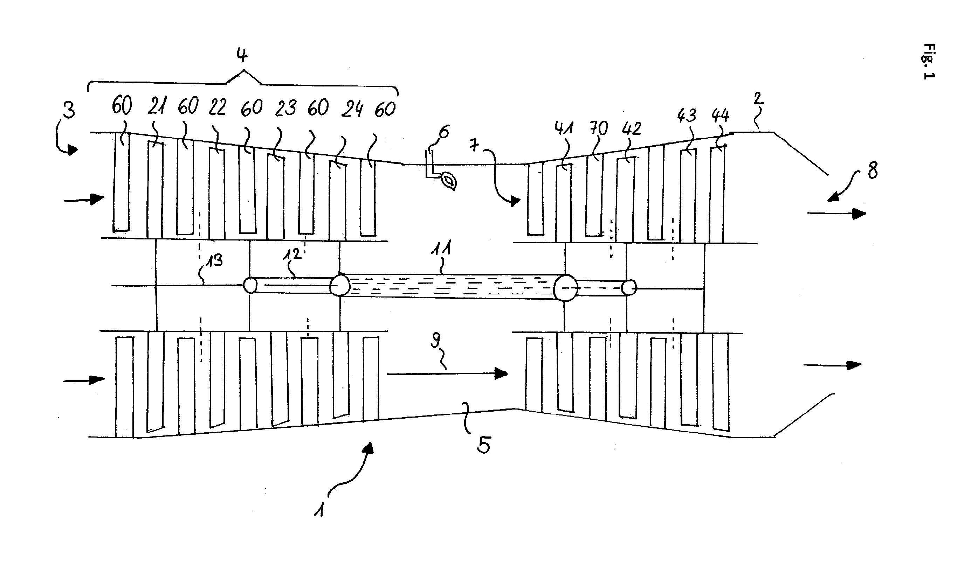

In figure 1 a preferred embodiment according to the invention is shown. A gas turbine 1 has a housing 2 with an air intake 3 for an air flow through the gas turbine 1, flowing in a direction 9 towards an outlet 8. Air enters the air inlet 3 and is compressed by compressor 4. Downstream of the compressor 4 is a combustion chamber 5 for heating the compressed air by burning fuel, being provided to the combustion chamber by for example at least one fuel supplies 6. The heated compressed air expands via turbine 7. The turbine 7 has at least one turbine stage, although as example four turbine stages 41, 42, 43, 44 are shown. The first turbine stage 41 drives a first drive shaft 11, the second turbine drives a second turbine shaft 12 and the third and fourth turbine stages 43, 44 commonly drive a third turbine shaft. The first to third turbine shafts 11, 12, 13 are coaxial turbine shafts. The second turbine stage 42 rotates in an opposite direction as the other turbine stages 41, 43, 44. Accordingly the second drive shaft 12 rotates in an opposite direction as the other drive shafts 11, 13.

The compressor 4 has four subsequent compressor stages, each comprising a blade wheel 21, 22, 23, 24 and optionally a diffuser 60. The diffusers 60 may be omitted, if there is any necessity. The first wheel 21 of the first compressor stage is connected directly to the third drive shaft 13 which drives the first compressor stage 21. In other words the third and fourth turbine stages 43, 44 are connected via the third drive shaft 13 with the third and fourth compressor stages 43, 44 and thereby drive the first turbine stage 21

The second and third compressor stages are coupled via the second drive shaft 12 to the second turbine stage. Accordingly the second and third compressor stages 22, 23 rotate in direction being opposed to the rotational direction of the first compressor stage.

The fourth compressor stage is connected via the first drive shaft 11 to the first turbine stage 41 and thus driven in the same rotational direction as the first compressor stage and in an opposite rotational direction to the second and third compressor stages 22, 23.

Assuming a "positive" rotational direction of the turbine stages 41, 43, 44 the first and third drive shaft 11, 13 have as well a positive rotational direction. The second and third blade wheels have a "negative" rotational direction. Therefore, the blade wheels form a sequence of two subsequent pairs "(+ -)" and "(- +)", yielding a sequence "(+ -) (- +)". If one assumes a "negative" rotational direction of the turbine stages 41, 43, 44 all signs and thus all rotational directions are inverted, so that the sequence is "(-+) (+-)". In any of both cases the axial flow entering the combustion chamber is optimized, because all turbine stages can be grouped in pairs, wherein one rotor in a pair rotates in the opposite direction to the rotor in the same pair. In addition the second compressor stage of the upstream pair, which is Figure 1 the compressor stage indicated by reference numeral 22 rotates in the same rotational direction as the first compressor stage of the downstream pair, which is in the depicted example the compressor stage indicated by reference numeral 23.

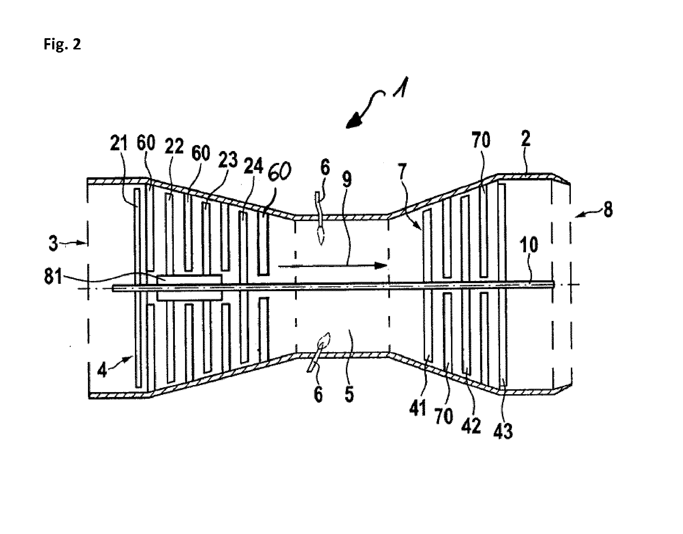

In figure 2 a further preferred embodiment according to the invention is shown. A gas turbine 1 has a housing 2 with an air intake 3 for an air flow through the gas turbine 1, flowing in a direction 9 towards an outlet 8. Air enters the air inlet 3 and is compressed by compressor 4. Downstream of the compressor 4 is a combustion chamber 5 for heating the compressed air by burning fuel, being provided to the combustion chamber by for example two fuel supplies 6. The heated compressed air expands via turbine 7. The turbine 7 has at least one turbine stage, although as example three turbine stages 41, 42, 43 are shown. The turbine is connected to a drive shaft 10 to thereby drive the drive shaft. The drive shaft 10 extends into the compressor 4 and drives it. The compressor 4 has four subsequent compressor stages, each comprising a blade wheel 21, 22, 23, 24 and optionally a diffuser 60. The diffusers 60 may be omitted if necessary. The first and fourth blade wheels 21, 24 of the first and the fourth compressor stages, respectively, are connected directly to the drive shaft 10 which drives the first compressor stage 21 and the fourth compressor stage 24. A reversing gear 81 is mounted on the drive shaft 10 between the first and fourth blade wheels 21, 24. The reverse gear may be a planetary gear. The second blade wheel 22 and the third blade wheel 23 are driven via the reversing gear 81 by the drive shaft 10 in the opposite rotational direction of the first and fourth blade wheels 21, 24. Thus, assuming a "positive" rotational direction of the turbine stages 41, 42, 43, the drive shaft as well has a positive rotational direction. Accordingly the blade wheels form a sequence of two subsequent pairs "(+ -)" and "(- +)", yielding a sequence "(+ -) (- +)". If one assumes a "negative" rotational direction of the turbine stages 41, 42, 43, all signs and thus all rotational directions are inverted, so that the sequence is "(-+) (+-)". In any of both cases the axial flow entering the combustion chamber is optimized.

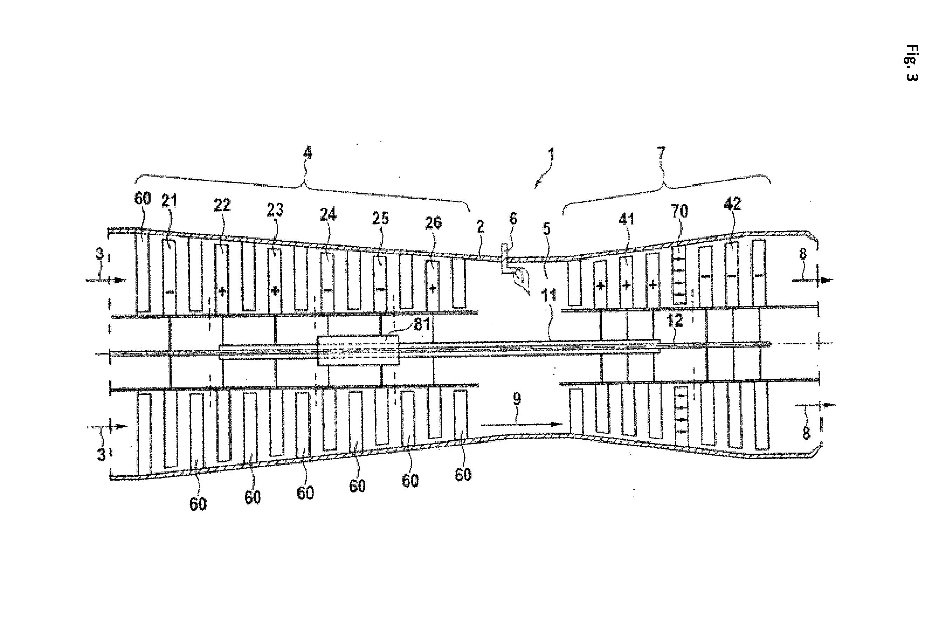

The gas turbine 1 in Fig. 3 as well has a housing 2 with an air inlet 3, a compressor 4, upstream of a combustion chamber 5. Downstream of the combustion chamber 5 is a turbine 7. The turbine has a first turbine stage with three first turbine blade wheels 41, rotating in a "+"-direction and a second turbine stage with three second turbine wheels 42 rotating in the opposite "-"-direction, indicated by a "-"-sign. The first turbine wheels 41 are connected to a first drive shaft 11 for driving the first drive shaft 11. The second turbine wheels 42 are connected to a second drive shaft 12 for driving the second drive shaft 12. The number of the turbine blade wheels 41, 42 of the respective turbine stage is only an example. There is at least one first and at least one second turbine blade wheel. The first and second drive shafts 11, 12 are coaxial shafts. The second drive shaft 12 is connected to first blade wheel 21 of a first compressor stage of six compressor stages 21 to 26 of compressor 4. Thus, the first blade wheel 21 is driven via the second drive shaft 12 by the second turbine wheels 42. The first turbine wheels 41 drive via the first drive shaft 11 the second to sixth blade wheels 22 to 26 of the respective second to sixth compressor stages. The second blade wheel 22 is coupled directly to the second drive shaft, thereby forming with the first blade wheel 21 a first pair of counterrotating blade wheels. The angular momentum provided to the air flow by the first blade wheel 21 is compensated at least partially by the subsequent counterrotating second blade wheel 22. Thus the angular momentum of the air flow between the second blade wheel 22 and the subsequent third blade wheel 23 at least almost zero. This permits to mount a the third blade wheel 23 as well directly on the second drive shaft 12, it thus rotates in the same direction as the second blade wheel 22. The second drive shaft is coupled to an input side of reversing gear. The output side is coupled to the fourth and fifth blade wheels 24, 25, which with respect to the second and third blade wheel 22, 23 counterrotate. Thereby the angular momentum provided to the air flow by the third blade wheel 23 is compensated by the counterrotating fourth blade wheel. Thus the third and fourth blade wheel 23, 24 are a second pair of counterrotating blade wheels. The angular momentum provided to the air flow through the compressor 4 by the fifth blade wheel 25 is compensated by the sixth blade wheel, which again is coupled directly to the second drive shaft 12. This the rotational directions of the first to sixth blade wheels form a sequence "-₂ +₁ +₁-_{1g} -_{1g} +₁", which can be grouped in subsequent pairs ("-₂ +₁", "+₁ -_{1g}" and"-_{1g} +₁")_{'} A downstream compressor stage of an upstream pair has the same rotational direction as the upstream compressor stage of the subsequent downstream pair.

### List of reference numerals

- 1: gas turbine
- 2: housing
- 3: air intake
- 4: compressor
- 5: combustion chamber
- 6: fuel supply
- 7: turbine / turbine section
- 8: outlet
- 9: direction of air flow
- 10: drive shaft
- 11: first drive shaft
- 12: second drive shaft
- 13: third drive shaft
- 21: first compressor stage
- 22: second compressor stage
- 23: third compressor stage
- 24: fourth compressor stage
- 25: fifth compressor stage
- 26: sixth compressor stage
- 41: first turbine stage / first turbine blade wheel
- 42: second turbine stage / second turbine blade wheel
- 43: third turbine stage / third turbine blade wheel44 fourth turbine stage /fourth turbine blade wheel
- 60: compressor diffuser/ stator blades
- 70: turbine stator vanes

## Claims

1. Gas Turbine (1) **characterized in that** a compressor (4) compresses pairs of compressor stages (21, 22, 23, 24), each rotor in a pair rotating in an opposite direction to the other of rotor the same pair by an equal performance of airflow.

2. Gas turbine (1) comprising at least a compressor (4), at least one combustion chamber and a turbine (6), wherein the turbine (6) comprises at least one turbine stage (41) driving at least one drive shaft (11), and the at least one drive shaft (11) drives at least four axial compressor stages (21, 22, 23, 24),
**characterized in that**
- the compressor stages (21, 22, 23, 24) can be grouped in at least two pairs, so that one rotor in each pair rotates in an opposite direction to the other rotor of the same pair and
- the downstream compressor stage (22) of the upstream pair (21, 22) rotates in the same rotational direction as the upstream compressor stage (23) of the downstream pair (23,24).

3. Gas turbine (1) of claim 1 or 2
**characterized in that**
a reversing gear (81) is coupled to the drive shaft (11) at its input side and coupled to the two compressor stages (22, 23) at its output side.

4. Gas turbine (1) of claim 3,
**characterized in that**
the reversing gear (81) is positioned on the at least one drive shaft (11) between two compressor stages (21,24) rotating in a common direction.

5. Gas turbine (1) of one of claims 1 to 4
**characterized in that**
the turbine (7) comprises at least one further turbine stage (42) counterrotating to said at least one turbine stage (41) and driving a further drive shaft (12), the further drive shaft (12) being arranged coaxially to said at least one drive shaft (11).

6. Gas turbine (1) of claim 5
**characterized in that**
the compressor (4) comprises at least two additional compressor stages, wherein one of the two additional compressor stages is driven by said at least one drive shaft (11) and **in that** the other compressor stage of said two additional compressor stages is driven by said further drive shaft (12) in a rotational direction being opposed to the rotational direction of said at least one drive shaft (11).

7. Gas turbine (1) of one of claims 5 or 6
**characterized in that**
the compressor (4) comprises at least one set of further four compressor stages, said four further compressor stages being all driven by said at least one drive shaft (11) or by said further drive shaft (12),
two compressor stages of said further four compressor stages are positioned in between of the other two of said further compressor stages and rotate in rotational direction being opposed to the direction of the other two of said further compressor stages, to thereby form at set of two pairs of compressor stages, wherein one rotor in each pair rotates in an opposite direction to the other rotor of the same pair.

8. Gas turbine (1) of one of the preceding claims **characterized in that**
the gas turbine (1) comprises at least one set of stator blades (60), being positioned between two subsequent compressor stages (21, 22, 23, 24, 25, 26) for reducing the non axial component of air flow in the gas turbine (1).
